# EUROPEAN PATENT SPECIFICATION

(11) **EP 1 429 580 B1**
(45) Date of publication and mention of the grant of the patent: **24.05.2006**
(21) Application number: 02027892.5
(22) Date of filing: 13.12.2002
(51) Int. Cl.: H04R 1/10

(54) **Clamping device for a headset**
Klemmvorrichtung für einen Kopfhörer
Dispositif de fixation pour un casque d'écoute

(43) Date of publication of application: 16.06.2004
(73) Proprietor: Sony Ericsson Mobile Communications AB, 221 88 Lund (SE)
(72) Inventor: Rinsma, Andries, NL-3551 BJ Utrecht (NL)
(74) Representative: Lindberg, Olle Nils Olof

(56) References cited:
- DE-U- 29 718 483
- US-A- 5 903 644
- PATENT ABSTRACTS OF JAPAN vol. 018, no. 099 (E-1510), 17 February 1994 (1994-02-17) -& JP 05 300207 A (PILOT CORP:THE), 12 November 1993 (1993-11-12)

## Description

### Field of the invention

The present invention relates to headsets used to position a speaker on a wearer's ear. More particularly, the invention relates to a clamping device for holding and stabilising an intra-concha type headset within the lower concha of the wearer's ear.

### Background

Since the end of the 20^{th} century the cellular telephone industry has had enormous development in the world. From the initial analog systems, such as those defined by the standards AMPS (Advanced Mobile Phone System) and NMT (Nordic Mobile Telephone), the development has during recent years been almost exclusively focused on standards for digital solutions for cellular radio network systems, such as D-AMPS (e.g., as specified in EIA/TIA-IS-54-B and IS-136) and GSM (Global System for Mobile Communications). Different digital transmission schemes are used in different systems, e.g. time division multiple access (TDMA) or code division multiple access (CDMA). Currently, the cellular technology is entering the so-called 3^{rd} generation, providing several advantages over the former, 2^{nd} generation, digital systems referred to above. Among those advantages an increased bandwidth will be provided, allowing effective communication of more complex data. The 3^{rd} generation of mobile systems have been referred to as the UMTS (Universal Mobile Telephony System) in Europe and CDMA2000 in the USA, and is already implemented in Japan to some extent. Furthermore, it is widely believed that the first generation of Personal Communication Networks (PCNs), employing low cost, pocket-sized, cordless telephones that can be carried comfortably and used to make or receive calls in the home, office, street, car, etc., will be provided by, for example, cellular carriers using the next generation digital cellular system infrastructure.

Accompanying the increase in use of portable communication terminals has been a desire for easy and convenient operation of these devices. In particular, manufacturers of mobile cellular radio telephones have long sought to provide efficient hands-free operation. In automobiles, for example, it is desirable to provide hands-free telephones for driver safety and convenience. With hands-free operation, the driver of a vehicle may use both hands to control the automobile.

One method of hands-free operation can be achieved by simply increasing the gain of the telephone's microphone and speaker to allow a user to speak and listen from some distance from the unit. Such a telephone is commonly referred to as a speakerphone. However, several problems are associated with a system constructed in this manner. For example, feedback and interference from ambient noise often make it difficult to clearly understand the words of the user. To help offset problems due to ambient noise, the microphone gain can be reduced by placing an external microphone connected via a wire to the main body of the radiotelephone close to the user's mouth. Nevertheless, the telephone speaker must still operate at high volume thereby diminishing the privacy of the received call.

Another solution is a headset carrying a speaker, and potentially a microphone, wherein a cable connects the headset to the main telephone apparatus. Although having improved performance and privacy, the headset must still be wired to the radiotelephone unit. Wire connections are often inconvenient, particularly for use with a portable radiotelephone. For this reason, cordless headsets, communicating wirelessly with communication terminals, have been developed. In cordless headset systems of today, communication may be achieved e.g. by infrared radiation or radio transmission. Headsets have also been disclosed including bluetooth technology for short-range radio communication with a communication terminal, such as a mobile phone.

Many different headset devices have been used to position and stabilise the speaker of a headset adjacent to a wearer's ear. The speaker or audio transducer is positioned adjacent to a wearer's ear in order to deliver audio communications to the wearer. A common headset design for holding an audio speaker adjacent to a wearer's ear is the headband style headset which fits over the wearer's head and positions the audio transducer in front of the wearer's ear canal. This style headset normally includes a stiff metal band or other rigid type support, which is weighted or otherwise balanced on the side opposite to the side holding the audio speaker to stabilise the headset on the wearer's head. If two audio speakers are included in a headband style headset, one on each side, then no weighting or balancing is necessary. Such a headset is typically heavy, mechanically complicated and for some wearer's, wearing a headband style headset for long periods of time is uncomfortable.

Conventional concha style headsets position the audio transducer inside the lower concha of the ear, between the tragus and the anti-tragus. However, different ear shapes and sizes make it difficult for a single design to both fit a wearer's ear correctly and to stabilise the headset. Typically, the receiver will be held in place by a headband, as described above, or other mechanical devices or stabilisers. An ear hook is an example of such a mechanical stabiliser, which has been used to stabilise an audio transducer within or on a wearer's ear. An ear hook is a large semicircular component that fits around the top of the wearer's ear between the helix of the ear and the side of the wearer's head. The audio transducer is then attached to the body of the ear hook and held in the lower concha in front of the ear canal. The ear hook and certain configurations of headbands suffer from the disadvantage that they will interfere with the arms of the wearer's eyeglasses.

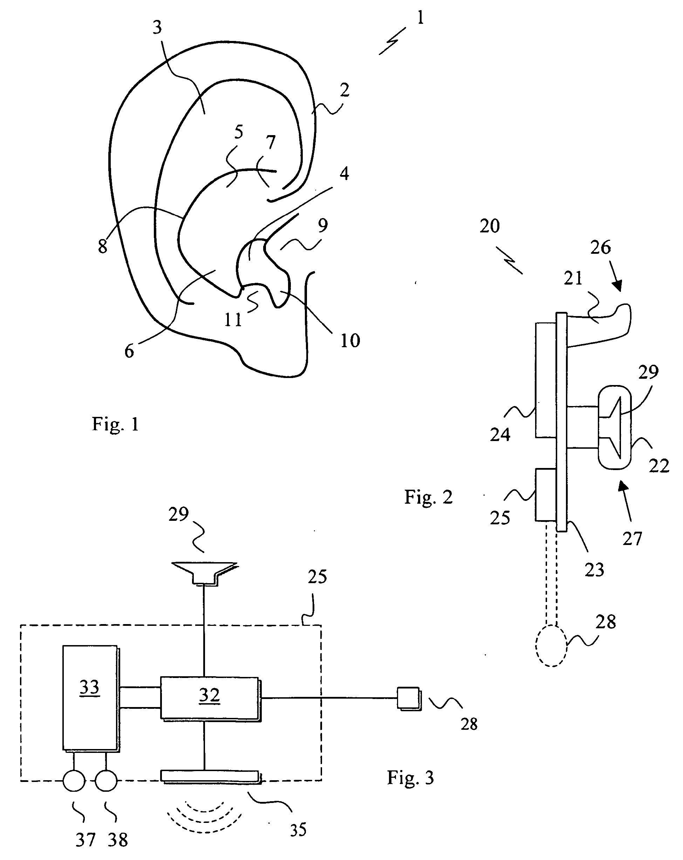

For illustration purposes and to aid in the understanding of the placement of the respective devices of the prior art and the present invention, a schematic illustration of a typical human ear is illustrated in Fig. 1. The outer ear 1, or pinna is an irregularly concave cartilaginous member comprised of a number of eminences and depressions which give each ear a distinct shape and form. The helix 2 is the curved outer rim of the ear. Below the helix 2 is the antihelix 3. The antihelix 3 is a curved prominence which describes a curve around the concha, a deep cavity containing the entry to the ear canal 4. The concha is divided into two parts, the upper concha 5 and the lower concha 6, by the crux of the helix 7 which curves around the outside of the ear, and extends inwards at about the vertical midpoint of the ear. The upper concha 5 lies above the crux of the helix 7 and below the antihelix 3. The lower concha 6 lies below the crux of the helix 7 and surrounds the entry to the ear canal 4. A conchal wall 8 separates the concha from the antihelix 3. In front of the lower concha 6 and projecting backwards from the front of the ear is the tragus 9, a small approximately semicircular prominence. Opposite the tragus 9 and separated from it by the deep curvature of the intertragic notch 10 is the antitragus 11. The intertragic notch 10 is formed between the tragus 9 and the antitragus 11.

What is needed is a comfortable mechanical support apparatus which supports an audio transducer positioned within the intertragic notch of the wearer's ear.

DE 29718483 U 1 to Lux-Wellenhof discloses a holder for attachment of e.g. a hearing aid, which has a sprung yoke that sits in contact with at least two opposing points on edge of the concha when inserted in a user's ear. A carrier connected to the yoke is of a size that allows a speaker device to lie near the entrance to aural passage.

US 5,903,644 by Scheider et al discloses a monaural communication device composed of a housing for receiving a receiver and a support component which is resiliently connected to the housing and is to be worn binaurally. The support component is constructed symmetrically and the housing and/or the support component is provided with grip elements which, when actuated, make it possible to fold or tilt the support component away from the housing by using the fingers of only one hand, and wherein, when the support component carries out a return movement by means of a spring, the support component clamps the pinna against the housing.

US 5,953,435 by Mullin et al proposes an intra-concha stabiliser with length adjustable conchal wall hook which securely holds an audio transducer or speaker within a wearer's ear. The audio speaker is held within a support integrally included within an outer shell of the stabiliser. Within the outer shell, a conchal wall hook carrier slides along an integrally formed groove within the outside of the outer shell. The conchal wall hook perpendicularly protrudes away from the inside of the outer shell and the conchal wall hook carrier in order to engage the conchal wall of the wearer's ear. When worn, the audio speaker is positioned within the wearer's ear between the tragus and the antitragus. The conchal wall hook is then slidably positioned against the conchal wall of the wearer's ear in order to secure the speaker within the ear.

Still, the design proposed by the aforementioned patent suffers from certain drawbacks. For one thing, the sliding arrangement requires that two cooperating members fit snugly into each other, such that said members will not slip and loose their grip of the ear. After extensive use the so called stabiliser will get worn in a way that inevitably will have a negative effect on the capability to maintain the grip. Furthermore, since the apparatus is devised to be used in close contact with human skin, the cooperating members will get greased, which will increase the tendency to of the grip between the cooperating members to slip. Yet another drawback is that the mentioned prior art solution requires manual adjustment for proper clamping in the concha.

### Summary of the invention

Hence, it is an object of the present invention to provide means for securely attaching a headset adjacent to the ear channel of a user. An aspect of this object is to provide a solution which overcomes the above-identified deficiencies related to the prior art.

According to the invention, this object is fulfilled by a clamping device for an intra-concha type audio headset as defined in claim 1.

Preferably, said means for adjusting the spacing includes a spring member. Said spring member may be devised to exert a linear force on said second clamping member, directed away from said first clamping member. Said spring member is in one embodiment devised to pull said second clamping member away from said first clamping member. In another embodiment, said spring member is devised to push said second clamping member away from said first clamping member.

In a first embodiment, said second clamping member is slidably attached to said support structure.

In a second embodiment, said second clamping member is pivotably attached to said support structure.

In said second embodiment, said spring member is devised to pivot said second clamping member, such that said second ear engagement rim is forced away from said first ear engagement rim.

Preferably, said first clamping member protrudes in a first direction from said support structure, whereas said second clamping member is pivotable about a first rotation axis which extends perpendicular to a line intersecting said first and second clamping members.

In a first variant of said second embodiment, said second clamping member has a centre axis extending in said first direction, whereas said rotation axis is off-centred from said centre axis.

Preferably, said off-centre rotation axis is parallel to said centre axis.

Advantageously, said second ear engagement rim defines a curved outer perimeter portion, of said second clamping member, preferably defining a circle arc about said centre axis.

In a third embodiment, said first rotation axis extends perpendicular to said first direction.

In said third embodiment, said second clamping member preferably has an arm member extending from said rotation axis to said second ear engagement rim.

Preferably, said second ear engagement rim defines a projecting portion of said arm member.

Said first clamping member may carry a speaker. Alternatively, said second clamping member carries a speaker.

Said support structure may further carry a microphone.

The detailed description shows specific features of various embodiments related to the aspects above.

### Brief description of the drawings

The present invention will now be described in more detail with reference to preferred embodiments, given only by way of example and illustrated in the accompanying drawings, in which:
Fig. 1 schematically illustrates a typical human ear;
Fig. 2 schematically illustrates a headset with a headset clamping device according to an embodiment of the invention;
Fig. 3 schematically illustrates a block diagram of the circuitry for a headset usable with the headset clamping device according the invention;
Fig. 4 schematically illustrates the use of a cordless headset for different communication terminals;
Fig. 5 illustrates a side view of a headset clamping device according to a first embodiment of the invention, in a rested state;
Fig. 6 schematically illustrates the headset clamping device of Fig. 5, in a loaded state;
Fig. 7 illustrates a side view of a headset clamping device according to a variant of said first embodiment of the invention, in a rested state;
Fig. 8 schematically illustrates the headset clamping device of Fig. 7, in a loaded state;
Fig. 9 illustrates an elevated view of a headset clamping device of Fig. 5 or 7, as seen from above;
Fig. 10 illustrates a perspective view of a variant of the clamping device of Fig. 9;
Fig. 11 illustrates a side view of a headset clamping device according to yet another variant of said first embodiment of the invention, in a rested state;
Fig. 12 schematically illustrates the headset clamping device of Fig. 11, in a loaded state;
Fig. 13 illustrates an elevated view of a headset clamping device of Fig. 11, as seen from above;
Fig. 14 illustrates a perspective view of a variant of the clamping device of Fig. 11;
Fig. 15 illustrates a side view of a headset clamping device according to a second embodiment of the invention, in a rested state;
Fig. 16 schematically illustrates the headset clamping device of Fig. 15, in a loaded intermediate state;
Fig. 17 schematically illustrates the headset clamping device of Fig. 15, in a fully loaded state;
Fig. 18 illustrates an elevated view of a headset clamping device of Fig. 15, as seen from above;
Fig. 19 illustrates an elevated view of a headset clamping device of Fig. 16, as seen from above;
Fig. 20 illustrates an elevated view of a headset clamping device of Fig. 17, as seen from above;
Fig. 21 illustrates a side view of a headset clamping device according to a third embodiment of the invention, in a rested state;
Fig. 22 schematically illustrates the headset clamping device of Fig. 21, in a loaded state;
Fig. 23 illustrates a side view of a headset clamping device according to a variant of said third embodiment of the invention, in a rested state;
Fig. 24 schematically illustrates the headset clamping device of Fig. 23, in a loaded state; and
Fig. 25 schematically illustrates a headset with a headset clamping device according to an embodiment of the invention, when engaged in the concha of a human ear.

### Detailed description of preferred embodiments

The present description refers to headsets for use as or with communication terminals. This includes headsets that are wire-connected to a communication terminal, such as a mobile phone, a media player or the like, and cordless headsets devised for wireless communication with a communication terminal or station. By headset is meant a device arranged to be worn by a user as a communication interface, including at least a speaker and means for communicating with a communication terminal by wire bound or wireless transmission of audio data. The headset may also include a microphone. Furthermore, the headset is arranged with some form of attaching means for positioning and retaining the headset in a preferred position on the user, with the speaker substantially placed at the user's ear adjacent to the ear canal, and the microphone, if included, in the vicinity of the user's mouth. The headset may consequently include all the features for a communication terminal, such as a mobile phone, but may alternatively only constitute the audio interface for the user. Where relevant, the following description is directed to the latter embodiment, but the skilled person will realise that the present invention is equally applicable to the first embodiment.

Fig. 2 illustrates a side view of a headset 20 carrying a clamping device for releasable attachment of the headset to the concha of a human ear. The headset 20 includes a support structure 23, which as such may comprise more than one member. The support structure carries the circuitry 25 for the headset, the clamping device for attaching the headset to the ear, and a speaker 29. The speaker is preferably enclosed in a protective casing 22, which defines a part of the clamping device. The headset may also include a microphone 28.

The clamping device comprises a first clamping member 21, projecting from the support structure. At an outer perimeter of the first clamping member 21, a first ear engagement rim 26 is formed. The support structure further carries a second clamping member 22, spaced from the first clamping member 21. The embodiment disclosed in Fig. 2 illustrates that the two cooperating clamping members project substantially parallel to each other with an intermediate spacing. The second clamping member 22 has a second ear engagement rim 27. The spacing between the two clamping members 21,22, or more correctly, the spacing between the first 26 and second 27 ear engagement rims facing away from each other, is adjustable. This way, by decreasing this spacing or distance, the clamping device may be introduced into the concha of a human ear. Once in place, the spacing is increased such that the first ear engagement rim 26 engages with the conchal wall 8, and the second ear engagement rim 27 engages with the ear at the intertragic notch 10.

Fig. 25 illustrates quite schematically the headset 20 when introduced into a human ear 1. The conchal wall 8 and the tragus 9 embrace the first 26 and second 27 ear engagement rims, respectively, holding the headset in place. A speaker is preferably included in the second clamping device, such that said speaker is positioned adjacent to the ear canal 4. The headset further includes means 24 for forcing said first and second ear engagement rims away from each other.

Fig. 3 illustrates the circuitry of the headset 20, although further elements than those disclosed may be implemented. A transceiver device 32 is included for transmitting and receiving audio data. For the case of a radio transmitting and receiving headset 20, the transceiver device 32 comprises or is connected to an antenna 35. In an embodiment making use of infrared transmission (not shown) the transceiver is preferably connected to a light emitter and a light detector, e.g. a light emitting diode LED and a photodiode. Optionally, the transceiver is connected to a cord for wire-bound transmission. The audio data is conveyed between a communication terminal and the headset 20, generally as a modulated carrier signal in e.g. radio or infrared. An audio converter is therefore further included in the transceiver device 32 of the headset 20, for converting between audio data and audio signals, such as speech. The transceiver device 32 is connected to a speaker 29 and a microphone 28. A power supply unit 33 supplies electrical energy to the electronics of the headset 20. In order to be able to charge the power supply unit, connectors 9,10 are coupled to the power supply unit 33, and preferably accessible from outside a casing enclosing the circuitry 25 of the headset. The power supply unit 33 is preferably a rechargeable battery, but may also be a capacitor. Power connectors 37, 38 are included for connection to a charger.

In one embodiment, the transceiver device 32 of the headset 20 includes a transmitter and a receiver, which allow for duplex communication with a communication terminal. The headset 20 also includes a transmitting and receiving element, such as the antenna 35, for transmitting and receiving signals from the communication terminal. For RF (Radio Frequency) signals, the antenna may be a small coil or wire or a flat pattern of conductive material, disposed within the body of the headset. In a preferred embodiment the transceiver 32 and antenna 35 may be devised according to the bluetooth technique for short-range radio communication. The receiver detects and demodulates the signal from the antenna to produce an audio signal. Several types of modulation may be employed including frequency modulation (FM), pulse width modulation (PWM), amplitude modulation (AM), single sideband AM, quadrature phase shift keying (QPSK), etc. The audio signal produced by the receiver is passed to an audio amplifier and to the speaker 29. The microphone 28 converts speech uttered by a user of the headset 20 into electrical signals that preferably are supplied to a bandpass filter of the transceiver device 32 for reducing extraneous noise. The output of the filter may be amplified by a suitable amplifier, the output of which is provided to the transmitter of the transceiver device 32. The transceiver 32 modulates an RF carrier with amplified output. It will be appreciated that the transceiver 32 may also include suitable audio signal conditioning components. In either embodiment, a modulated carrier is coupled to the antenna 35 which radiates for reception in a communication terminal.

It should be pointed out that the present invention is equally applicable to a headset only devised for reception, carrying only a speaker but no microphone.

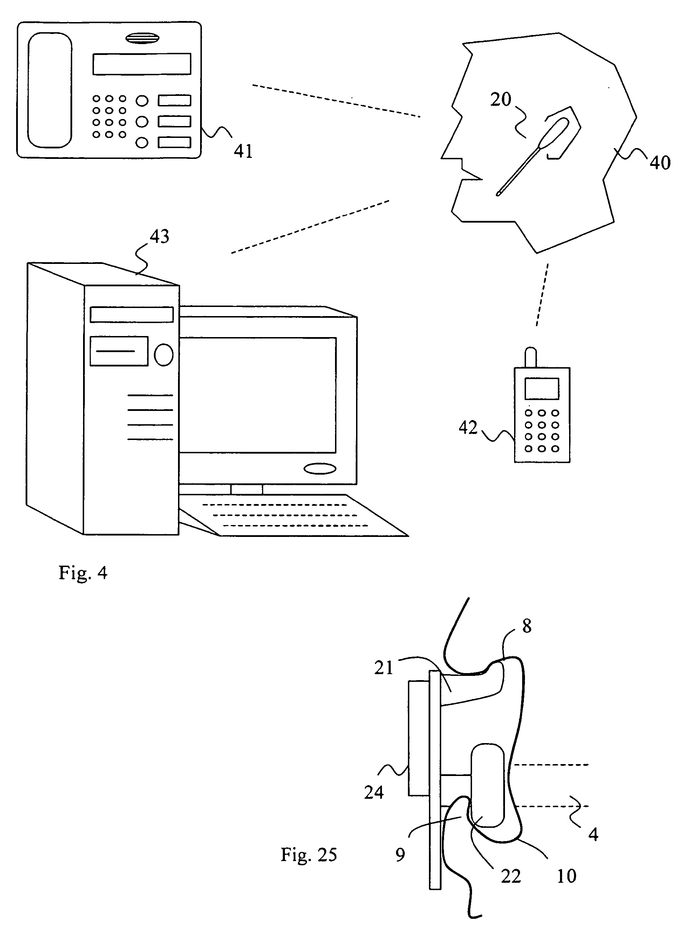

Fig. 4 illustrates a user 40 wearing a headset 20 with bluetooth transmission capabilities. The headset 20 is communicatively connectable by bluetooth to a mobile phone 42, for further communication through a mobile phone network. Furthermore, the same headset 20 may be communicatively connectable by bluetooth to a PSTN or IP phone 41 in e.g. the user's office or home. Correspondingly, the headset 20 may be connectable to several other communication terminals, mobile or stationary. One example is a desktop or laptop computer 43, on which a voice-controlled software may be operated. However, as the skilled person will realise, a headset communicatively connectable to different terminals does not have to use the same transmission interface towards those different terminals.

In accordance with the invention, the clamping device of the headset includes means for resiliently forcing the cooperating ear engagement rims away from each other. The following describes three different embodiments realising this feature, and some variants to each embodiment.

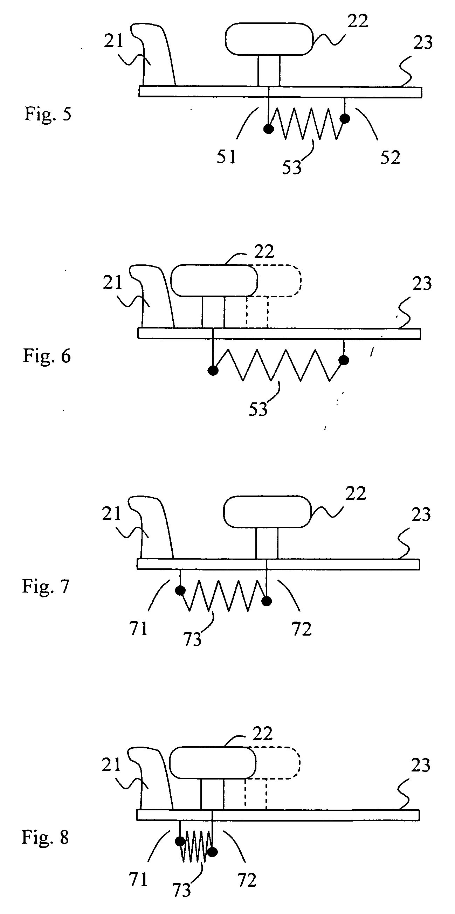

Fig 5 schematically illustrates a side view of a first embodiment of the headset clamping device. The first clamping member 21 is fixed to the support structure 23, whereas the second clamping member 22 is displaceable along support structure 23 in a direction towards the first clamping member 21. A spring member 53 is connected at one end 52 to support structure 23, and at an opposite end 51 to the second clamping member 22. Fig 5 discloses the clamping device in a rested state. The rested state does not necessarily mean that the spring member 53 is without tension. On the contrary, the spring member 53 is preferably slightly loaded or biased also in the rested state of Fig 5, wherein some form of stopping means (not shown) preferably are included for defining a maximum spacing between the clamping members 21, 22.

Fig 6 illustrates the same embodiment as in Fig 5, but in a loaded state. The loaded state is assumed by forcing the second clamping member 22 towards the first clamping member 21, thus decreasing the distance between the first and second ear engagement rims 26, 27, respectively. When displacing the second clamping member 22 from the position illustrated in Fig 5 and by the dashed line in Fig 6, to the position indicated by the fully drawn line in Fig 6, the spring member 53 is extracted. This means that in order to displace the second clamping member from the position of Fig 5 to the position of Fig 6, a force has to be applied. Furthermore, this means that if the two clamping members 21, 22 are forced together as in Fig 6 and then placed in the concha of the human ear, after which the second clamping member 22 is released, spring member 53 will serve to maintain the engagement between the ear engagement rims 26, 27 and the ear.

Fig 7 illustrates an embodiment similar to that of Figs 5 and 6, with the only difference that spring member 73 exerts a pushing force on the second clamping member 22 instead of a pulling force. Consequently, when displacing the second clamping member into the position of Fig 8, the spring member 73 is contracted rather than extracted.

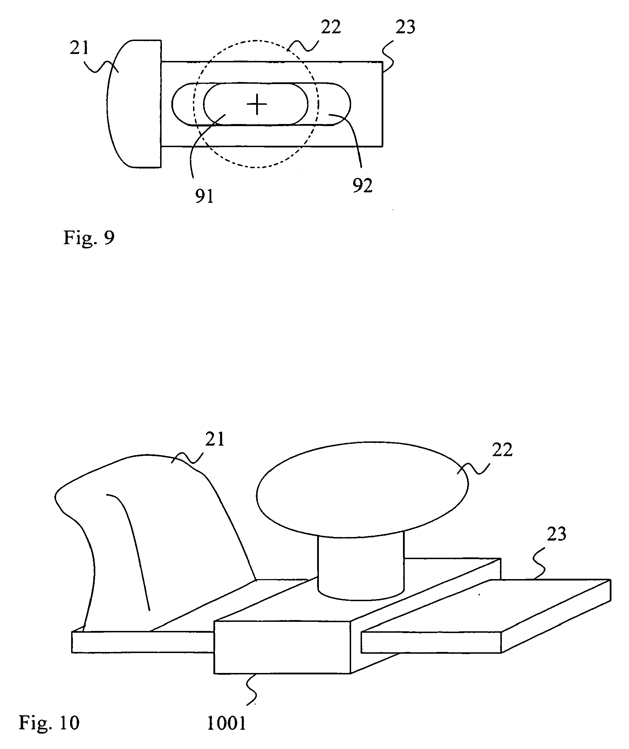

Fig 9 illustrates the embodiment of a clamping device as seen from the side devised to face the ear, i.e. the side facing upwards in Figs 5-8. Fig 9 simply describes a way of providing means for displacing the second clamping member 22 in relation to the first clamping member 21. In the exemplary embodiment of Fig 9, an elongated slot 92 is formed in the support structure 23, extending in a direction between the co-operating clamping members 21, 22. The second clamping member 22, shown in phantom, has a guide member 91, which fits in the slot 92, such that the second clamping member 22 may slide in the recess or slot 92 towards and away from the first clamping member 21. The spring member and the means for attaching it to the second clamping member 22 is not disclosed in Fig 9, but may for instance be any of those disclosed in Figs 5-8.

Fig 10 illustrates a perspective view of a variant to the clamping device of Fig 9. In the embodiment of Fig 10, the second clamping device 22 is arranged on a slide 1001, fully or partly enclosing opposite side edges of the support structure 23. This way, the slide may be displaced along the support structure 23. As for Fig 9, the specific realisation of the spring member and its attachment is not disclosed in Fig 10.

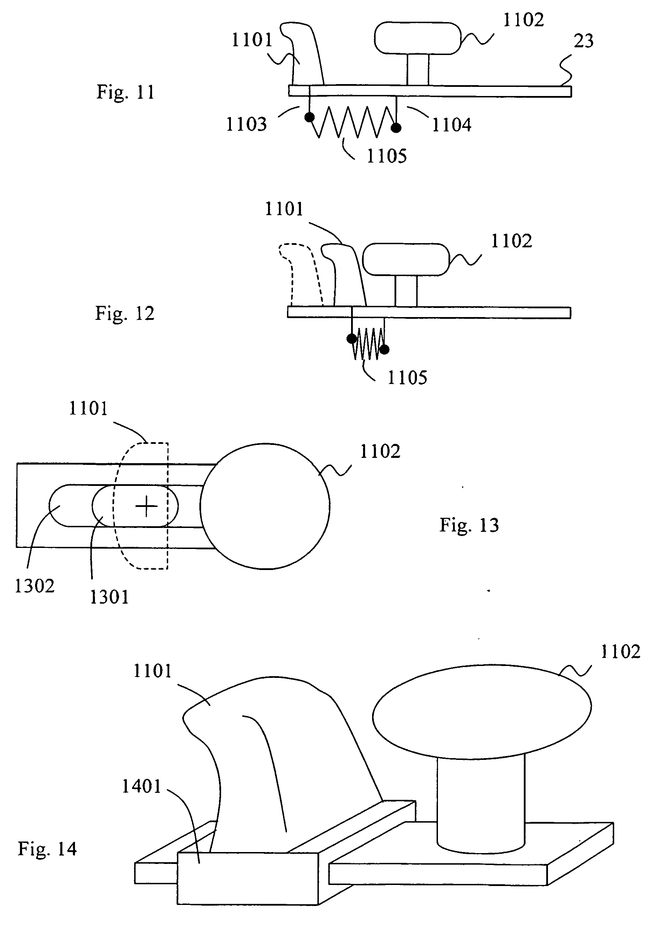

Yet another variant of the first embodiment is shown in Figs 11 and 12. In Fig 11, the second clamping member 1002 is fixed to support structure 23, whereas the first clamping member 1101 is slideably connected to support structure 23. The spring device 1105 is connected at 1103 at the first clamping device 1101, whereas the spring member 1105 is connected at 1104 to the support structure 23. The embodiment disclosed in Figs 11 and 12, in rested and loaded state, respectively, is devised such that the spring member 1105 is contracted upon loading. Obviously, an arrangement corresponding to Figs 5 and 6 may also be applied to this variant of the embodiment, in which the first clamping member 1101 is displaced from the second clamping member 1102 under extraction of the spring member.

Fig 13 illustrates a view of the embodiment of Fig 11 as seen from the side devised to face an ear, in a manner corresponding to the drawing of Fig 9. However, in this case the second clamping member 1102 is firmly connected to support structure 23, whereas the first clamping member 1101 is connected to or includes a guide 1301 which runs in an elongated slot 1302 in the support structure.

Fig 14 illustrates a variant of the specific solution for obtaining the sliding motion for the first clamping member 1101, corresponding to the drawing of Fig 10. As such, the first clamping member is connected to slide 1401, fully or partly embracing the support structure 23 about opposing side edges. Slide 1401 is then devised to slide along support structure 23, towards and away from the second clamping member 1102.

The disclosure of the embodiments of Figs 11-14 simply illustrate that the clamping member containing the speaker maybe firmly attached to the support structure, whereas the co-operating clamping member is displaceable in relation to the support structure and the second clamping member. The previous drawings of Figs 5-10 illustrate another arrangement, in which it is the clamping member containing the speaker that is displaced in relation to the first clamping member and the support structure. The same effect is obtained, however, by means of the spring member devised to force the co-operating clamping members apart.

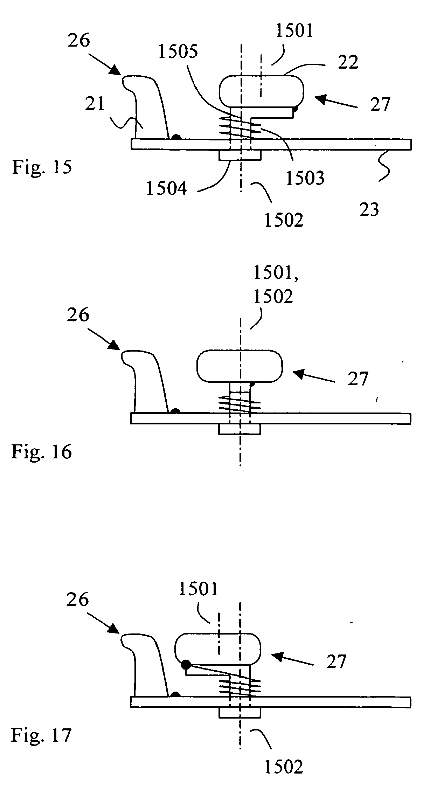

Fig 15 illustrates a side view of a second embodiment of the headset clamping device. It should be noted that this second embodiment is described only in a variant with the speaker arranged in the displaceable clamping member 22, however, as the skilled person would realise, the same means for achieving the displacement may instead be applied to the first clamping member. In the embodiments of Fig 15, the first clamping member 21 is fixed to the support structure 23. The second clamping member 22 is arranged at a distance from the first clamping member 21, and projects substantially in the same direction as the first clamping member 21. The second ear engagement rim 27 of the second clamping member 22 has a substantially circular curvature about a centre axis 1501. This curvature may be semi-circular or define only a portion of a circle, but preferably the ear engagement rim 27 defines a full circular periphery about the centre axis 1501. The second ear engagement rim 27, defined by a head portion of the second clamping member 22, is connected to the support structure 53 through a shaft 1505, extending substantially parallel to the projection direction of the first clamping member 21. The second clamping member 22 is pivotable about said shaft 1505, which defines a rotation axis 1502 which is off-centred from the centre axis 1501. This way, rotation of the second clamping member 22 about said rotation axis 1502 will cause a change in the distance between the first ear engagement rim 26 and the second ear engagement rim 27 facing away from the first ear engagement rim 26. A spring member 1503 is biased to force the second ear engagement rim 27 away from the first ear engagement rim 26. Said spring member may be devised to apply a linear force to the off-centre position of the second clamping member 22. However, as disclosed in Fig 15, spring member 1503 is preferably arranged helically about shaft 1505 and connected to the support structure 23 at one end and to the second clamping member 22 at the opposite end.

In Fig 16, the second clamping member 22 has been pivoted approximately 90° about rotation axis 1502, such that the spacing between the first ear engagement rim 26 and the portion of the second ear engagement rim 27 facing away from the first ear engagement rim 26 has decreased.

Fig 17, finally, illustrates a fully loaded state in which the second clamping member 22 has been pivoted approximately 180° from the rested state of Fig 15. In this fully loaded state, the minimum obtainable spacing between the ear engagement rims 26, 27, respectively, is assumed. By forcing the second clamping member to this position and then placing the clamping members in the concha of the ear, and thereafter releasing the second clamping member, the second clamping member will rotate by the force of spring member 1503 into engagement with the ear.

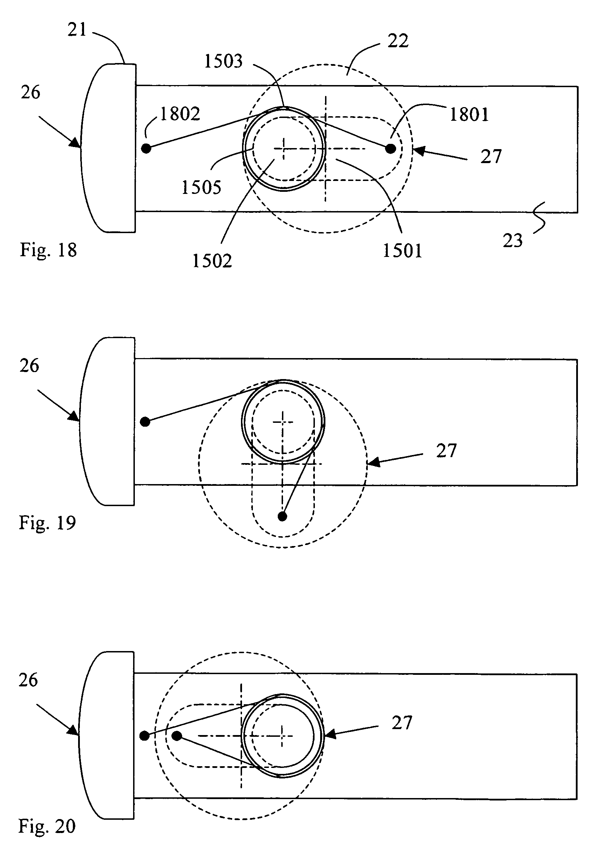

Figs 18-20 illustrate the states previously shown in Figs 15-17, as seen from the side of the headset facing the ear. These drawings illustrate more clearly how the second clamping member 22 is rotated about the rotation axis 1502, such that the outer perimeter of the ear engagement rim 27 is displaced towards the first ear engagement rim 26.

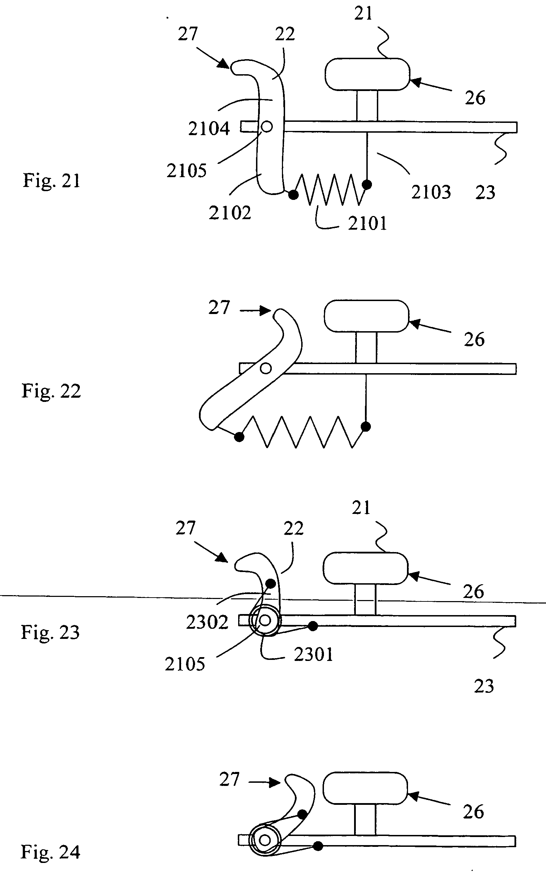

Fig 21 illustrates a third embodiment of the clamping device of the present invention. In this case, the drawing illustrates an embodiment in which the first clamping member 21 carrying the speaker is fixed to the support structure 23, whereas the second clamping member 22 is pivotable in relation to the first clamping member 21. However, as previously described in relation to the other embodiments, the same concept may be applied by instead pivoting the clamping member carrying the speaker in relation to a co-operating clamping member fixed to the support structure 23. In the embodiment of Fig 21, the second clamping member 22 is connected to support structure 23 by a shaft or hinge device defining a rotation axis 2105. In this case, rotation axis 2105 extends perpendicular to the direction between the first and second terminal members 21, 22, respectively, and also perpendicular to the direction in which the first clamping member 21 projects. The second clamping member 22 comprises an arm member 2104 extending from the point of articulation about rotation axis 2105, away from said axis 2105 to an outer perimeter defining the second ear engagement rim 27. Preferably, the second ear engagement rim 27 is defined by a protruding portion from said arm member 2104, such that a hook like shape is defined. In the specific embodiment of Fig 21, a portion 2102 of the second clamping member 22, spaced from said rotation axis 2105, is connected to a spring member 2101, which in turn is connected at 2103 to the support structure 23. This way, the force applied by spring member 2101 will generate a moment about rotation axis 2105, forcing the second ear engagement rim 27 away from the first clamping member 21. Fig 21 illustrates the embodiment in its rested state, and as before the rested state is preferably maintained by some form of stopping means preventing further rotation of the second clamping member 22 away from the first clamping member 21, though not shown.

Fig 22 illustrates the embodiment of Fig 21 in a loaded state. This loaded state is assumed by rotating the second clamping member 22 such that the second ear engagement rim 27 is displaced towards the first engagement rim 26 of the first clamping member 21. By this rotation, spring member 2101 has been extracted and thereby exerts a force on the second clamping member 22 forcing the second ear engagement rim 27 away from the first ear engagement rim 26.

Figs 23 and 24 illustrate a variant of the third embodiment of Figs 21 and 22, respectively. In this variant, the spring member 2301 is instead wound about rotation axis 2105, and connected at one end at support structure 23, and at an opposite end to an arm member 2302 of the second clamping member 22. Fig 23 discloses a rested state whereas Fig 24 discloses a loaded state.

A benefit of the present invention is that only one action is required when attaching the headset to the ear, namely to press the ear engagement rims towards each other, by rotation or displacement of one of the clamping members. Once in place in the concha, the rotateable or displaceable clamping member is released, whereby it automatically assumes a clamping engagement with the ear. The spring automatically adjusts the dimension of the clamping system to the ear. This makes a headset designed according the present invention more convenient for the user than the prior art solutions, since a faster and more accurate attachment to the ear is provided. Furthermore, since the clamping device is preloaded or biased by the spring device, the clamping effect will not be deteriorated by wear or perspiration from the user.

The foregoing has described the principles, preferred embodiments and modes of operation of the present invention. However, the invention should not be construed as being limited to the particular embodiments discussed above. Notably, some features have been highlighted in relation to specific embodiments, but as the skilled person will realise, several of those features are applicable also to others of the described embodiments. Thus, the above-described embodiments should be regarded as illustrative rather than restrictive, and it should be appreciated that variations may be made in those embodiments by workers skilled in the art without departing from the scope of the present invention, as defined by the following claims.

## Claims

1. Clamping device for an intra-concha type audio headset (20), comprising a support structure (23) carrying a first clamping member (21) having a first ear engagement rim (26), a second clamping member (22) having a second ear engagement rim (27), and means (24) for adjusting the spacing between said first and second ear engagement rims for releasable intra-concha engagement with a human ear, **characterised in that** said first clamping member is arranged in firm relation to said support structure, whereas said second clamping member is attached to the support structure such that the second ear engagement rim is displaceable or pivotable away from said first clamping member, and that said means for adjusting the spacing resiliently forces said engagement rims away from each other.

2. The clamping device as recited in claim 1, **characterised in that** said means for adjusting the spacing includes a spring member (53).

3. The clamping device as recited in claim 2, **characterised in that** said spring member is devised to exert a linear force on said second clamping member, directed away from said first clamping member.

4. The clamping device as recited in claim 3, **characterised in that** said spring member (53) is devised to pull said second clamping member away from said first clamping member.

5. The clamping device as recited in claim 3, **characterised in that** said spring member (73) is devised to push said second clamping member away from said first clamping member.

6. The clamping device as recited in claim 1, **characterised in that** said second clamping member is slidably attached to said support structure.

7. The clamping device as recited in claim 2, **characterised in that** said spring member (1503) is devised to pivot said second clamping member, such that said second ear engagement rim is forced away from said first ear engagement rim.

8. The clamping device as recited in claim 1, **characterised in that** said first clamping member (21) protrudes in a first direction from said support structure, whereas said second clamping member is pivotable about a first rotation axis (1502) which extends perpendicular to a line intersecting said first and second clamping members.

9. The clamping device as recited in claim 8, **characterised in that** said second clamping member has a centre axis (1501) extending in said first direction, whereas said rotation axis is off-centred from said centre axis.

10. The clamping device as recited in claim 9, **characterised in that** said off-centre rotation axis is parallel to said centre axis.

11. The clamping device as recited in claim 9, **characterised in that** said second ear engagement rim defines a curved outer perimeter portion (27) of said second clamping member.

12. The clamping device as recited in claim 10, **characterised in that** said curved outer perimeter portion defines a circle arc about said centre axis.

13. The clamping device as recited in claim 8, **characterised in that** said first rotation axis (2105) extends perpendicular to said first direction.

14. The clamping device as recited in claim 12, **characterised in that** said second clamping member has an arm member (2104) extending from said rotation axis to said second ear engagement rim.

15. The clamping device as recited in claim 13, **characterised in that** said second ear engagement rim (27) defines a projecting portion of said arm member.

16. The clamping device as recited in claim 1, **characterised in that** said first clamping member (21) carries a speaker.

17. The clamping device as recited in claim 1, **characterised in that** said second clamping member (22) carries a speaker.

18. The clamping device as recited in claim 1, **characterised in that** said support structure carries a microphone (28).

## Patentansprüche

1. Klemmvorrichtung für ein Audio-Headset (20) des Intra-Concha-Typs, umfassend eine Trägerstruktur (23), welche ein erstes Klemmelement (21) trägt, welches einen ersten Ohreingriffsrand (26) aufweist, ein zweites Klemmenelement (22), welches einen zweiten Ohreingriffsrand (27) aufweist, und eine Einrichtung (24) zum Einstellen des Abstands zwischen den ersten und zweiten Ohreingriffsrändern zum lösbaren Intra-Concha-Eingriff mit einem mensehlichen Ohr, **dadurch gekennzeichnet, dass** das erste Klemmelement in fester Beziehung zu der Trägerstruktur angeordnet ist, wohingegen das zweite Klemmelement an der Trägerstruktur derartig angebracht ist, das der zweite Ohreingriffsrand versetzbar oder wegschwenkbar von dem ersten Klemmelement ist, und dass die Einrichtung zum Einstellen des Abstands die Eingriffsränder elastisch voneinander wegdrückt.

2. Klemmvorrichtung gemäß Anspruch 1, **dadurch gekennzeichnet, dass** die Einrichtung zum Einstellen des Abstands ein Federelement (53) enthält.

3. Klemmvorrichtung gemäß Anspruch 2, **dadurch gekennzeichnet, dass** das Federelement gestaltet ist, um eine lineare Kraft auf das zweite Klemmelement auszuüben, welche von dem ersten Klemmelement weg gerichtet ist.

4. Klemmvorrichtung gemäß Anspruch 3, **dadurch gekennzeichnet, dass** das Federelement (53) gestaltet ist, um das zweite Klemmenlement von dem ersten Klemmelement wegzuziehen.

5. Klemmvorrichtung gemäß Anspruch 3, **dadurch gekennzeichnet, dass** das Federelement (73) gestaltet ist, um das zweite Klemmelement von dem ersten Klemmelement wegzudrücken.

6. Klemmvorrichtung gemäß Anspruch 1, **dadurch gekennzeichnet, dass** das zweite Klemmelement verschiebbar an der Tragerstruktur angebracht ist.

7. Klemmvorrichtung gemäß Anspruch 2, **dadurch gekennzeichnet, dass** das Federelement (1503) gestaltet ist, um das zweite Klemmelement zu schwenken, so dass der zweite Ohreingriffsrand von dem ersten Ohreingriffsrand weggedrückt wird.

8. Klemmvorrichtung gemäß Anspruch 1, **dadurch gekennzeichnet, dass** das erste Klemmelement (21) in einer ersten Richtung von der Trägerstruktur hervorragt, wohingegen das zweite Klemmelement um eine erste Rotationsachse (1502) schwenkbar ist, welche sich senkrecht zu einer Linie erstreekt, welche sich mit den ersten und zweiten Klemmelementen schneidet.

9. Klemmvorrichtung gemäß Anspruch 8, **dadurch gekennzeichnet, dass** das zweite Klemmelement eine Mittelachse (1501) aufweist, welche sich in der ersten Richtung erstreckt, wohingegen die Rotationsachse exzentrisch zu der Mittelachse ist,

10. Klemmvorrichtung gemäß Anspruch 9, **dadurch gekennzeichnet, dass** die exzentrische Rotationsachse parallel zu der Mittelachse ist.

11. Klemmvorrichtung gemäß Anspruch 9, **dadurch gekennzeichnet, dass** der zweite Ohreingriffsrand einen gekrümmten Außenumfangsabschnitt (27) des zweiten Klemmelements definiert.

12. Klemmvorrichtung gemäß Anspruch 10, **dadurch gekennzeichnet, dass** der gekrümmte Außenumfangsabschnitt einen Kreisbogen um die Mittelachse definiert.

13. Klemmvorrichtung gemäß Anspruch 8, **dadurch gekennzeichnet, dass** sich die erste Rotationsachse (2105) senkrecht zu der ersten Richtung erstreckt.

14. Klemmvorrichtung gemäß Anspruch 12, **dadurch gekennzeichnet, dass** das zweite Klemmelement ein Armelement (2104) aufweist, welches sich von der Rotationsachse zu dem zweiten Ohreingriffsrand erstreckt.

15. Klemmvorrichtung gemäß Anspruch 13, **dadurch gekennzeichnet, dass** der zweite Ohreingriffsrand (27) einen hervorstehenden Abschnitt des Armelements definiert.

16. Klemmvorrichtung gemäß Anspruch 1, **dadurch gekennzeichnet, dass** das erste Klemmelement (21) einen Lautsprecher enthält.

17. Klemmvorrichtung gemäß Anspruch 1, **dadurch gekennzeichnet, dass** das zweite Klemmelement (22) einen Lautsprecher enthält.

18. Die Klemmvorrichtung gemäß Anspruch 1, **dadurch gekennzeichnet, dass** die Trägerstruktur ein Mikrophon (28) enthält.

## Revendications

1. Dispositif de serrage pour un casque audio du type intra-conque (20) comprenant une structure de support (23) portant un premier élément de serrage (21) présentant un premier rebord d'engagement avec l'oreille (26), un second élément de serrage (22) comportant un second rebord d'engagement avec l'oreille (27), et un moyen (24) destiné à ajuster l'espacement entre lesdits premier et second rebords d'engagement avec l'oreille en vue d'un engagement intra-conque libérables avec une oreille humaine, **caractérisé en ce que** ledit premier élément de serrage est agencé en relation ferme avec ladite structure de support, alors que ledit second élément de serrage est fixé à la structure de support de sorte que le second rebord d'engagement avec l'oreille peut être déplacé ou peut pivoter pour s'écarter dudit premier élément de serrage, et que ledit moyen destiné à régler l'espacement force de manière élastique les rebords d'engagement à s'écarter l'un de l'autre.

2. Dispositif de serrage selon la revendication 1, **caractérisé en ce que** ledit moyen de réglage de l'espacement comprend un élément de ressort (53)

3. Dispositif de serrage selon la revendication 2, **caractérise en ce que** ledit élément de ressort est conçu pour exercer une force linéaire sur ledit second élément de serrage, détourné dudit premier élément de serrage.

4. Dispositif de serrage selon la revendication 3, **caractérisé en ce que** ledit élément de ressort (53) est conçu pour tirer ledit second élément de serrage pour l'écarter dudit premier élément de serrage.

5. Dispositif de serrage selon la revendication 3, **caractérisé en ce que** ledit élément de ressort (73) est conçu pour pousser ledit second élément de serrage à l'écart dudit premier élément de serrage.

6. Dispositif de serrage selon la revendication 1, **caractérisé en ce que** ledit second élément de serrage est fixe avec possibilité de coulissement a ladite structure de support.

7. Dispositif de serrage selon la revendication 2, **caractérisé en ce que** ledit élément de ressort (1503) est conçu pour faire pivoter ledit second élément de serrage, de sorte que ledit second rebord d'engagement avec l'oreille est forcé à s'écarter dudit premier rebord d'engagement d'oreille.

8. Dispositif de serrage, selon, la revendication 1, **caractérisé en ce que** ledit premier élément de serrage (21) dépasse dans une première direction de ladite structure de support, alors que ledit second élément de serrage peut pivoter autour d'un premier axe de rotation (1502) qui s' étend perpendiculairement à une droite coupant lesdits premier et second éléments de serrage.

9. Dispositif de serrage selon la revendication 8, **caractérisé en ce que** ledit second élément de serrage comporte un axe central (1501) s'étendait dans ladite première direction, alors que ledit axe de rotation est excentré par rapport audit axe centrale.

10. Dispositif de serrage selon la revendication 9, **caractérisé en ce que** ledit axe de rotation excentré est parallèle audit axe central.

11. Dispositif de serrage selon la revendication 9, **caractérisé en ce que** ledit second rebord d'engagement avec l'oreille définit une partie de périmètre extérieur incurvée (27) dudit second élément de serrage.

12. Dispositif de serrage selon la revendication 10, **caractérisé en ce que** ladite partie de périmètre extérieur incurvée définit un arc de cercle autour dudit axe central.

13. Dispositif de serrage selon la revendication 8, **caractérisé en ce que** ledit premier axe de rotation (2105) s'étend perpendiculairement à ladite première direction.

14. Dispositif de serrage selon la revendication 12, **caractérisé en ce que** ledit second élément de serrage comporte un élément de bras (2104) s'étendant depuis ledit axe de rotation vers ledit second rebord d'engagement avec l'oreille.

15. Dispositif de serrage selon la revendication 13, **caractérisé en ce que** ledit second rebord d'engagement avec l'oreille (27) définit une partie qui dépasse dudit élément de bras.

16. Dispositif de serrage selon la revendication 1, **caractérisé en ce que** ledit premier élément de serrage (21) porte un haut -parleur.

17. Dispositif de serrage selon la revendication 1, **caractérisé en ce que** ledit second élément de serrage (22) porte un haut-parleur.

18. Dispositif de serrage selon la revendication 1, **caractérisé en ce que** ladite structure de support porte un microphone (28).
